# EUROPÄISCHE PATENTSCHRIFT

(11) **EP 4 403 029 B1**
(45) Veröffentlichungstag und Bekanntmachung des Hinweises auf die Patenterteilung: **17.12.2025**
(21) Anmeldenummer: 24020019.6
(22) Anmeldetag: 15.01.2024
(51) Int. Cl.: A01M 25/00

(54) **VORRICHTUNG ZUR BEREITSTELLUNG EINES GIFTKÖDERS FÜR EINEN SCHADNAGER**
DEVICE FOR PROVIDING A TOXIC BAIT TO A PEST RODENT
DISPOSITIF DE FOURNITURE D'UN APPÂT TOXIQUE POUR UN RONGEUR NUISIBLE

(30) Priorität: 21.01.2023 DE 102023000177
(43) Veröffentlichungstag der Anmeldung: 24.07.2024
(73) Patentinhaber: Beck & Brehm UG, 71106 Magstadt (DE)
(72) Erfinder: Beck, Jörg, 71106 Magstadt (DE); Brehm, Günter, 71263 Weil der Stadt (DE)
(74) Vertreter: Gittinger, Andreas

(56) Entgegenhaltungen:
- DE-A1- 102014 112 804
- DE-A1- 102020 129 733
- DE-C- 928 497
- DE-U1- 202016 001 724
- US-A1- 2017 055 516
- US-A1- 2019 075 783

## Beschreibung

Die Erfindung betrifft eine Vorrichtung zur Bereitstellung eines Giftköders für einen Schadnager mit einem einseitig offenen Behälter, der bei einem steigenden Flüssigkeitsspiegel durch eine Auftriebskraft gegen einen Deckel drückbar ist.

Allgemein ist eine zunehmende Plage durch Schadnager zu beobachten. Beispielhaft sei an dieser Stelle auf eine überproportionale Rattenverbreitung hingewiesen. Daraus resultiert ein Gesundheitsrisiko für den Menschen. Außerdem verursachen Schadnager und insbesondere Ratten große Schäden an Gebäuden und an der Infrastruktur. Um dieser Entwicklung Einhalt zu gebieten, sind die öffentliche Hand und Betreiber von Abwasseranlagen gesetzlich zur Rattenbekämpfung verpflichtet. Am wirkungsvollsten sind Giftköder auf der Basis von Blutverdünnern. Die Blutverdünner können jedoch insbesondere durch das Zusammenwirken mit Wasser in die Umgebung gelangen, beispielsweise über die Abwasserkanalisation bis in die Kläranlagen. In Kläranlagen können die Blutverdünner nicht vollständig beseitigt werden, sodass sie ins Trinkwasser gelangen können. Deshalb verbieten gesetzliche Vorschriften, dass Wasser mit dem Giftköder in Kontakt kommen darf. Daraus resultieren technische Anforderungen an die Bereitstellung des Giftköders, damit dieser trocken und funktionstüchtig bleibt.

So beschreibt die DE 20 2016 001 724 U1 einen Behälter zur Aufnahme eines vergifteten Fraßköders zur Bekämpfung von Schadnagern in der Kanalisation. Der Behälter wird bei steigendem Wasserstand durch eine Auftriebskraft gegen ein Oberteil gedrückt, sodass das Oberteil den Behälter verschließt. Dadurch wird verhindert, dass das Gift des Fraßköder in die Kanalisation und in ein Klärwerk gelangt.

Eine Vorrichtung zur Halterung eines Köders für Nagetiere wird in der DE 10 2014 112 804 A1 offenbart. Die Vorrichtung ist lösbar an einer Wandlung der Kanalisation befestigt. Die Vorrichtung weist einen Schließkörper auf, in dem der Köder für das Nagetier bereitgestellt wird. Der Schließkörper ist schwimmfähig und wird bei einem steigenden Flüssigkeitsspiegel in der Kanalisation nach oben gegen einen Zylinder gedrückt, sodass der Köder vor einem Kontakt mit der Flüssigkeit geschützt ist.

Die DE 10 2020 129 733 A1 beschreibt eine Köderbox zur Aufnahme eines Giftköders für ein Nagetier. Der Giftköder ist in einer Aufnahmekammer untergebracht. Um zu vermeiden, dass das Gift des Giftköders in die Kanalisation gelangt, kann die Aufnahmekammer mit einer Polystyrolkugel bei steigendem Wasserspiegel verschlossen werden.

Die Druckschrift US 2017/055516 A1 beschreibt eine Vorrichtung zur Aufnahme von Ködern, umfassend ein Gehäuseteil, das in einen Schacht, insbesondere einen Kanalschacht oder einen Kabelkanalschacht, einsetzbar ist. Eine Köderplattform ist im Gehäuseteil angeordnet. Die Vorrichtung besitzt eine Durchgangsöffnung, durch die ein Nagetier einen auf der Köderplattform angeordneten Köder erreichen kann.

Die Erfindung hat die Aufgabe, eine Vorrichtung der eingangs genannten Art bereitzustellen, mit der bei einem steigenden Flüssigkeitsspiegel verhindert wird, dass das Gift eines Giftköders in die Umgebung gelangt.

Die Erfindung löst die gestellte Aufgabe mit einer gattungsgemäßen Vorrichtung, die erfindungsgemäß ein Gestell mit einer dazu ortsfesten Köderplattform zur Aufnahme eines Giftköders und einen über der Köderplattform angebrachten Deckel aufweist, wobei die Köderplattform von einem Behälter umschließbar ist. Auf diese Weise ist sichergestellt, dass der Giftköder bei einem steigenden Flüssigkeitsspiegel nicht mit der Flüssigkeit in Kontakt kommen und ein darin enthaltenes Gift in die Umgebung gelangen kann.

Die Flüssigkeit kann vorzugsweise ein Abwasser, beispielsweise in einer Kanalisation sein. Es kann sich bei der Flüssigkeit auch um Regenwasser oder um eine Flüssigkeit mit einem geringen oder gar keinem Wassergehalt handeln. Dies hängt von den jeweiligen Umgebungsverhältnissen ab, bei denen die Vorrichtung verwendet wird.

Um Vertrauen beim Schadnager aufzubauen und somit eine möglichst hohe Besuchsfrequenz an Schadnagern sicherzustellen, kann die Köderplattform für den Schadnager frei einsehbar sein. Die Köderplattform kann seitlich offen sein, solange die Köderplattform vom Behälter nicht teilweise oder vollständig umschlossen ist. Zur Erhöhung der Besuchsfrequenz, kann die Köderplattform relativ zu einem Grund, auf dem die Vorrichtung respektive das Gestell steht, erhöht angebracht sein. Solange also der Flüssigkeitsspiegel keine Auftriebskraft auf den Behälter ausübt, kann der Giftköder von dem Schadnager schon von weitem gut erkannt werden. Der instinktiv vorsichtige Schadnager muss folglich nicht seine Scheu überwinden, um in einen dunklen Behälter einzutreten und an den Giftköder zu gelangen.

Die Köderplattform kann mindestens einen Aufstieg aufweisen. Dadurch kann der Schadnager leicht und ohne Umwege an den frei einsehbaren Giftköder auf der bevorzugt erhöht angebrachten Köderplattform gelangen.

Damit der Behälter bei einem mehr oder weniger rasch ansteigen Flüssigkeitsspiegel auch unter seinem Boden zuverlässig von der Flüssigkeit umspült werden kann, kann der Boden des abgesenkten Behälters zum Grund, auf dem die Vorrichtung steht, beabstandet sein.

Um die auf den Behälter wirkende Auftriebskraft zu verstärken, kann der Boden des Behälters mit einem Auftriebskörper ausgerüstet sein.

Wenn das Gestell mit mehreren Öffnungen versehen ist, durch welche die Flüssigkeit eintreten kann, so kann der Behälter zuverlässig von der Flüssigkeit umspült und unterspült werden. Dadurch ist sichergestellt, dass der Behälter schnell gegen den Deckel gedrückt wird und der im Behälter befindliche Giftköder zuverlässig trocken bleibt.

Das Gestell kann im Bereich zwischen zwei Öffnungen derart ausgebildet sein, dass die Energie von plötzlich auf das Gestell auftreffender Flüssigkeit dissipiert wird. Dadurch wird die Vorrichtung von einer plötzlichen Flüssigkeitswelle nicht so stark mitgerissen und/oder ein aufrechter Stand der Vorrichtung unterstützt.

Wenn das Gestell zwischen den Öffnungen Standfüße aufweist, so können diese ebenfalls derart ausgebildet sein, dass die Energie der plötzlich auf das Gestell auftreffenden Flüssigkeit dissipiert wird.

Um der Vorrichtung zusätzlich einen stabilen Stand auf dem Grund zu verleihen, kann sie mit mindestens einem Zusatzgewicht ausgerüstet sein. Das mindestens eine Zusatzgewicht kann vorzugsweise im Bereich der Standfüße angebracht sein, sodass der Schwerpunkt der Vorrichtung möglichst tief in der Nähe des Grundes liegt. Dadurch wird ein aufrechter Stand der Vorrichtung auch bei einer starken Strömung der Flüssigkeit unterstützt.

Als zusätzliche Maßnahme, um eine möglichst zuverlässige Ortsstabilität der Vorrichtung zu gewährleisten, kann eine Kette über dem Deckel montiert sein. Somit kann die Vorrichtung auch in einer Kanalisation bei hohen Strömungsgeschwindigkeiten sicher betrieben werden. Es ist jedoch auch möglich, die Vorrichtung beispielsweise in einem Keller eines Gebäudes einzusetzen.

Nachfolgend werden verschiedene Ausführungsbeispiele einer erfindungsgemäßen Vorrichtung anhand der beiliegenden Zeichnungen näher erläutert.

Im Einzelnen zeigen:
- Fig. 1: eine erste Ausführungsform einer Vorrichtung in einem ersten Betriebszustand mit einer frei zugänglichen Köderplattform;
- Fig. 2: die Vorrichtung aus Fig. 1 in einem zweiten Betriebszustand mit einer vollkommen abgeschlossenen Köderplattform;
- Fig. 3: eine perspektivische Draufsicht auf eine zweite Ausführungsform der Vorrichtung im ersten Betriebszustand mit der frei zugänglichen Köderplattform;
- Fig. 4: eine Schnittansicht durch die Vorrichtung aus Fig. 3;
- Fig. 5: eine Detailansicht der Vorrichtung aus Fig. 4 im Bereich zwischen einer Köderplattform und einem Gestell.

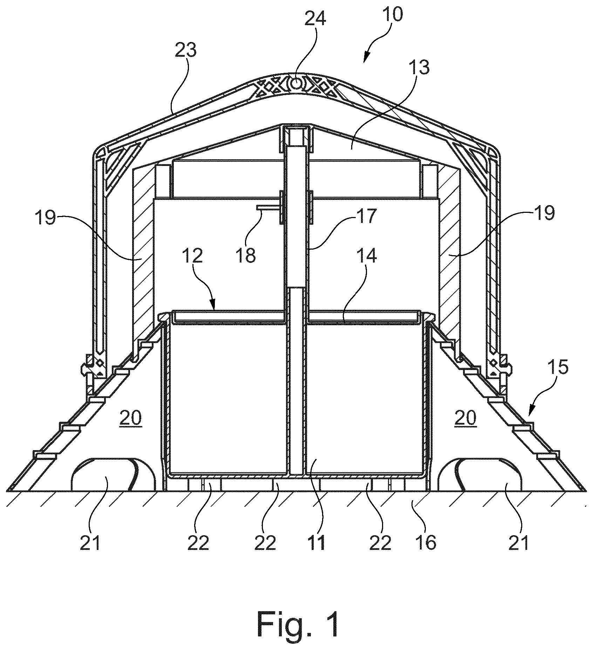

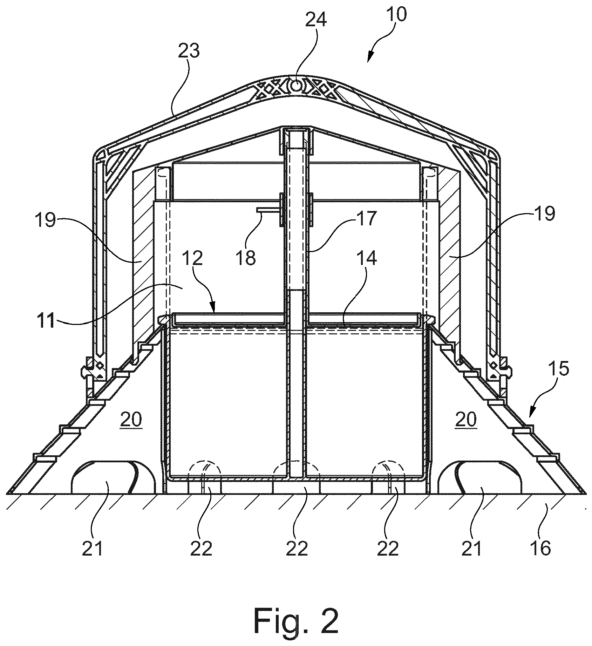

Die Fign. 1 und 2 zeigen eine Vorrichtung 10 zur Bereitstellung eines hier nicht näher dargestellten Giftköders für einen Schadnager mit einem einseitig offenen Behälter 11. Der Behälter 11 weist eine Öffnung 12 auf, welche durch einen Deckel 13 verschlossen wird, sobald der Behälter 11 infolge eines steigenden Flüssigkeitsspiegels durch eine Auftriebskraft gegen den Deckel 13 gedrückt (siehe Fig. 2) und der Giftköder somit vor der Flüssigkeit geschützt wird.

Die Vorrichtung 10 weist ein Gestell 15 mit einer dazu ortsfesten Köderplattform 14 auf. Die Vorrichtung 10 steht mit dem Gestell 15 auf einem Grund 16.

Der Behälter 11 ist ein Zylinder und die Köderplattform 14 eine runde Scheibe. Es ist jedoch auch möglich den Behälter 11 und die Köderplattform 14 rechteckig oder mit einer anderen mehreckigen Kontur auszubilden.

Die Köderplattform 14 ist mit einer Säule 17 an dem Deckel 13 hängend verbunden. Wenn der Behälter 11 herabgelassen ist, befindet sich die Köderplattform 14 im Bereich der Öffnung 12 des Behälters 11 (siehe Fig. 1). Der Giftköder, der dem Schadnager auf der Köderplattform 12 bei herabgelassenem Behälter 11 frei zugänglich präsentiert wird, kann an einer Befestigungseinrichtung 18 befestigt werden.

Die Öffnung 12 ist von den Abmessungen so gewählt, dass ihr Innendurchmesser etwas größer als der Außendurchmesser der Köderplattform ist. Somit kann der Behälter 11 infolge des steigenden Flüssigkeitsspiegels die Köderplattform 14 umschließen und den Giftköder vor einem Kontakt mit der Flüssigkeit schützen.

Der Deckel 13 ist mit mehreren Stützen 19 am Gestell 15 angebunden.

Das Gestell 15 weist mehrere Standfüße 20 auf, die mit Öffnungen 21 versehen sind. Durch die Öffnungen 21 kann eine Flüssigkeit, die beispielsweise ein Abwasser oder ein Regenwasser in einer Kanalisation sein kann, unter das Gestell 15 und unter den Behälter 11 gespült werden, sodass der Behälter 11 infolge des steigenden Flüssigkeitsspiegels in Richtung des Deckels 13 angehoben und gegen den Deckel 13 gedrückt wird, sobald der Flüssigkeitsspiegel eine ausreichende Höhe erreicht hat. Zusätzlich zu den Öffnungen 21 weist das Gestell Öffnungen 22 auf, um ein zuverlässiges Unterspülen des Behälters 11 mit der Flüssigkeit sicherzustellen.

Die Standfüße 20 sind gleichzeitig auch als Aufstiege ausgeführt, damit der Schadnager den Giftköder auf der Köderplattform 14 bequem erreichen kann. In den Standfüßen 20 können außerdem Gewichte integriert sein, damit die Vorrichtung 10 möglichst zuverlässig an ihrem Standort und lagestabil auf den Standfüßen 20 verharrt, wenn die Flüssigkeit mit einer hohen Strömungsgeschwindigkeit die Vorrichtung 10 umspült.

Der Deckel 13 und die Stützen 19 sind von einem Bügelgestell 23 umgeben, das ebenfalls am Gestell 15 befestigt ist. In dem Bügelgestell 23 ist eine Öffnung 24 vorgesehen, an welcher eine hier nicht näher dargestellte Kette befestigt werden kann, um die Vorrichtung 10 beispielsweise bei einer starken Strömung in der Kanalisation zu fixieren.

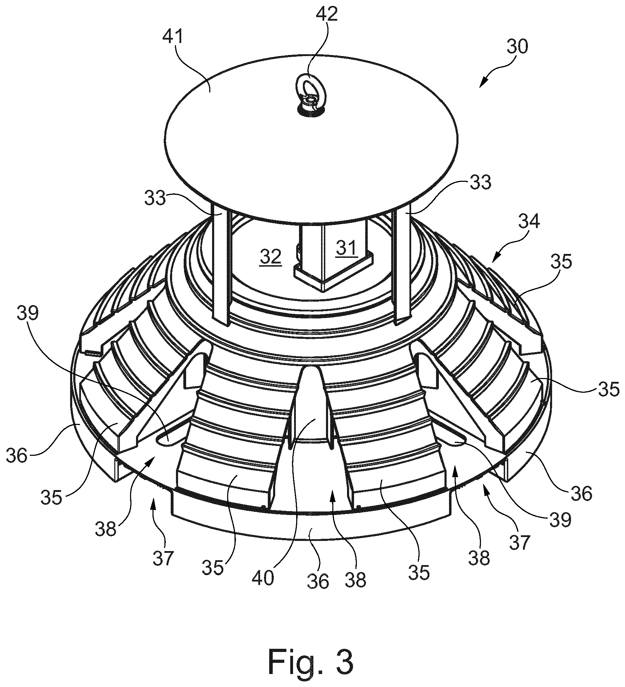

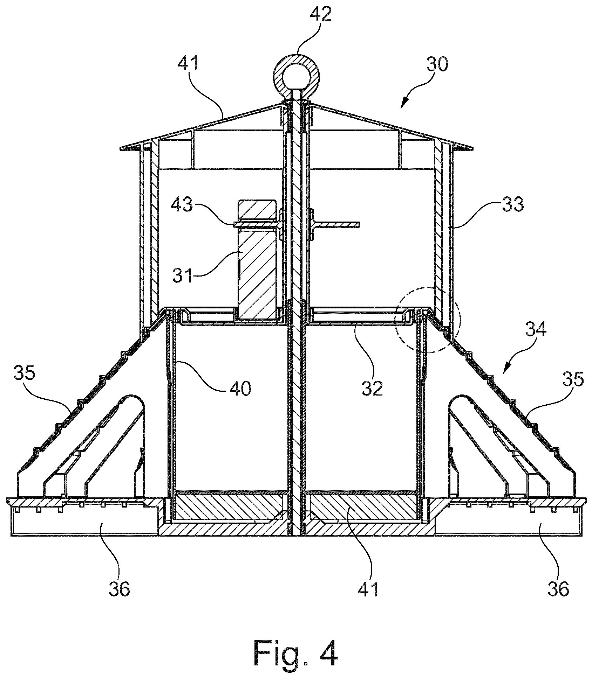

Die Fign. 3 und 4 zeigen eine Vorrichtung 30 zur Bereitstellung eines Giftköders 31, die auf einer Köderplattform 32 dem Schadnager angeboten wird.

Die Vorrichtung 30 weist ein Gestell 34 auf, dass mit Aufstiegen 35 ausgerüstet ist, damit der Schadnager bequem an den frei einsehbaren Giftköder 31 gelangen kann. Das Gestell 34 weist Standfüße 36 auf, zwischen denen Öffnungen 37 vorgesehen sind. Ferner sind zwischen den Standfüßen 36 Durchbrüche 38 in das Gestell 34 eingebracht, die teilweise mit Öffnungen 39 versehen sind. Die Öffnungen 37 und 39 sowie die Durchbrüche 38 sorgen dafür, dass ein herabgelassener Behälter 40 zuverlässig von der Flüssigkeit unterspült und durch eine Auftriebskraft nach oben gegen einen Deckel 41 gedrückt wird, um die Köderplattform 32 zu verschließen und somit einen Kontakt des Giftköders 31 mit der Flüssigkeit zu vermeiden.

Die Standfüße 36 des Gestells 34 sind so ausgebildet, dass die Energie von plötzlich auf das Gestell 34 auftreffender Flüssigkeit dissipiert wird.

Der Deckel 41 ist mit Stützen 33 an dem Gestell 34 angebunden. Oberhalb des Deckels 41 ist eine Öse 42 montiert, an der eine hier nicht näher dargestellte Kette zur Fixierung der Vorrichtung 30 befestigt werden kann.

Der Giftköder 31 ist mit einer Befestigungseinrichtung 43 an der Vorrichtung 10 befestigt.

Unterhalb des Behälters 40 ist ein Auftriebskörper 41 angebracht, um einen schnellen Auftrieb des Behälters 40 zu ermöglichen.

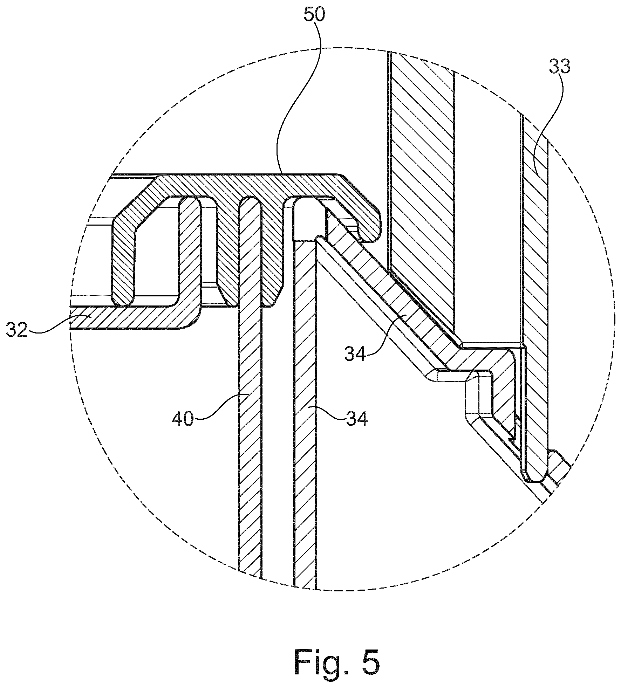

Fig. 5 zeigt eine umlaufende Krempe 50, die an einer Oberkante des Behälters 40 eingehängt ist. Sie vermeidet das Schmutz zwischen das Gestell 34 und den Behälter 40 bzw. zwischen den Behälter 40 und die Köderplattform 32 gelangen kann. Dadurch wird die Gefahr eines Verklemmens und/oder eine Schwergängigkeit des Behälters 40 reduziert, sodass dieser zuverlässig durch den steigenden Flüssigkeitsspiegel zum Deckel 41 hinbewegt werden kann. Die Krempe 50 kann auch eine Dichtfunktion zwischen dem Behälter 40 und dem Deckel 41 übernehmen, sobald die Auftriebskraft den Behälter 40 gegen den Deckel 41 drückt.

### BEZUGSZEICHENLISTE

- 10: Vorrichtung
- 11: Behälter
- 12: Öffnung
- 13: Deckel
- 14: Köderplattform
- 15: Gestell
- 16: Grund
- 17: Säule
- 18: Befestigungseinrichtung
- 19: Stütze
- 20: Standfuß
- 21: Öffnung
- 22: Öffnung
- 23: Bügelgestell
- 24: Öffnung

- 30: Vorrichtung
- 31: Giftköder
- 32: Köderplattform
- 33: Stützen
- 34: Gestell
- 35: Aufstieg
- 36: Standfuß
- 37: Öffnung
- 38: Durchbruch
- 39: Öffnung
- 40: Behälter
- 41: Deckel
- 42: Öse
- 50: Krempe

## Patentansprüche

1. Vorrichtung (10, 30) zur Bereitstellung eines Giftköders (31) für einen Schadnager mit einem einseitig offenen Behälter (11, 40), der bei einem steigenden Flüssigkeitsspiegel durch eine Auftriebskraft gegen einen Deckel (13, 41) drückbar ist, **dadurch gekennzeichnet, dass** sie ein Gestell (15, 34) mit einer dazu ortsfesten Köderplattform (14, 32) zur Aufnahme des Giftköders (31) und den über der Köderplattform angebrachten Deckel (13, 41) aufweist, wobei die Köderplattform (14, 32) vom Behälter (11, 40) umschließbar ist.

2. Vorrichtung (10, 30) nach dem vorhergehenden Anspruch, **dadurch gekennzeichnet, dass** die Köderplattform (14, 32) derart konfiguriert ist, dass sie für den Schadnager frei einsehbar ist.

3. Vorrichtung (10, 30) nach einem der vorhergehenden Ansprüche, **dadurch gekennzeichnet, dass** die Köderplattform (14, 32) mindestens einen Aufstieg (20, 35) aufweist.

4. Vorrichtung (10, 30) nach einem der vorhergehenden Ansprüche, **dadurch gekennzeichnet, dass** ein Boden des abgesenkten Behälters (11, 40) zu einem Grund (16), auf dem die Vorrichtung (10, 30) steht, beabstandet ist.

5. Vorrichtung (30) nach Anspruch 4, **dadurch gekennzeichnet, dass** der Boden des Behälters (40) einen Auftriebskörper aufweist.

6. Vorrichtung (10, 30) nach einem der vorhergehenden Ansprüche, **dadurch gekennzeichnet, dass** das Gestell (15, 34) mit mehreren Öffnungen (21, 22, 37, 39) versehen ist.

7. Vorrichtung (30) nach Anspruch 6, **dadurch gekennzeichnet, dass** das Gestell (34) im Bereich zwischen zwei Öffnungen (37) derart ausgebildet ist, dass die Energie von plötzlich auf das Gestell (34) auftreffender Flüssigkeit dissipiert wird.

8. Vorrichtung (10, 30) nach einem der vorhergehenden Ansprüche, **dadurch gekennzeichnet, dass** sie mit mindestens einem Zusatzgewicht versehen ist.

9. Vorrichtung (10, 30) nach einem der vorhergehenden Ansprüche, **dadurch gekennzeichnet, dass** eine Kette über dem Deckel (13, 41) montiert ist.

10. Vorrichtung (30) nach einem der Ansprüche 6 bis 9, **dadurch gekennzeichnet, dass** das Gestell (15, 34) zwischen den Öffnungen (37) Standfüße (36) aufweist.

## Claims

1. A device (10, 30) for providing a toxic bait (31) for a pest rodent, comprising a container (11, 40) which is open on one side and which can be pressed against a lid (13, 41) by a buoyancy force when a liquid level rises, **characterized in that** it comprises a frame (15, 34) with a bait platform (14, 32) which is stationary thereto for receiving the toxic bait (31) and the lid (13, 41) mounted above the bait platform, wherein the bait platform (14, 32) can be enclosed by the container (11, 40).

2. The device (10, 30) according to the preceding claim, **characterized in that** the bait platform (14, 32) is configured in such a manner that it is freely visible to the pest rodent.

3. The device (10, 30) according to one of the preceding claims, **characterized in that** the bait platform (14, 32) has at least one ascent (20, 35).

4. The device (10, 30) according to one of the preceding claims, **characterized in that** a bottom of the lowered container (11, 40) is spaced apart from a base (16) on which the device (10, 30) stands.

5. The device (30) according to Claim 4, **characterized in that** the bottom of the container (40) comprises a buoyancy body.

6. The device (10, 30) according to one of the preceding claims, **characterized in that** the frame (15, 34) is provided with a plurality of openings (21, 22, 37, 39).

7. The device (30) according to Claim 6, **characterized in that** the frame (34) is configured in the region between two openings (37) in such a manner that the energy of liquid suddenly impinging upon the frame (34) is dissipated.

8. The device (10, 30) according to one of the preceding claims, **characterized in that** it is provided with at least one additional weight.

9. The device (10, 30) according to one of the preceding claims, **characterized in that** a chain is mounted above the lid (13, 41).

10. The device (30) according to one of Claims 6 to 9, **characterized in that** the frame (15, 34) has feet (36) between the openings (37).

## Revendications

1. Dispositif (10, 30), destiné à mettre à disposition un appât empoisonné (31) pour un rongeur nuisible, pourvu d'un réservoir (11, 40) ouvert unilatéralement, qui lorsque le niveau de liquide monte, est susceptible d'être poussé par une force ascendante contre un couvercle (13, 41), **caractérisé en ce qu'**il comporte un châssis (15, 34), avec une plateforme (14, 32) à appât, stationnaire à cet effet, destinée à recevoir l'appât empoisonné (31) et le couvercle (13, 41) monté au-dessus de la plateforme à appât, la plateforme (14, 32) à appât étant susceptible d'être entourée par le réservoir (11, 40).

2. Dispositif (10, 30) selon l'une quelconque des revendications précédentes, **caractérisé en ce que** la plateforme (14, 32) à appât est configurée de telle sorte qu'elle soit librement visible par le rongeur nuisible.

3. Dispositif (10, 30) selon l'une quelconque des revendications précédentes, **caractérisé en ce que** la plateforme (14, 32) à appât comporte au moins une montée (20, 35).

4. Dispositif (10, 30) selon l'une quelconque des revendications précédentes, **caractérisé en ce qu'**un fond inférieur du réservoir (11, 40) surbaissé est espacé par rapport à un support (16), sur lequel se tient le dispositif (10, 30).

5. Dispositif (30) selon la revendication 4, **caractérisé en ce que** le fond inférieur du réservoir (40) comporte un corps flottant.

6. Dispositif (10, 30) selon l'une quelconque des revendications précédentes, **caractérisé en ce que** le châssis (15, 34) est muni de plusieurs orifices (21, 22, 37, 39).

7. Dispositif (30) selon la revendication 6, **caractérisé en ce que** dans la zone entre deux orifices (37), le châssis (34) est conçu de telle sorte que l'énergie d'un liquide brusquement incident sur le châssis (34) soit dissipée.

8. Dispositif (10, 30) selon l'une quelconque des revendications précédentes, **caractérisé en ce qu'**il est muni d'au moins un poids additionnel.

9. Dispositif (10, 30) selon l'une quelconque des revendications précédentes, **caractérisé en ce qu'**une chaîne est montée au-dessus du couvercle (13, 41).

10. Dispositif (30) selon l'une quelconque des revendications 6 à 9, **caractérisé en ce qu'**entre les orifices (37), le châssis (15, 34) est muni de pieds (36).
